# EUROPEAN PATENT SPECIFICATION

(11) **EP 1 279 355 B1**
(45) Date of publication and mention of the grant of the patent: **14.06.2006**
(21) Application number: 02016721.9
(22) Date of filing: 26.07.2002
(51) Int. Cl.: A47B 67/02, B62B 3/18, A61G 12/00

(54) **Cabinet for conveying medecine**
Schrank zum Befördern von Medizin
Armoire pour convoyer des médicaments

(30) Priority: 27.07.2001 JP 2001227612
(43) Date of publication of application: 29.01.2003
(73) Proprietor: Yuyama Mfg. Co., Ltd., Toyonaka-shi, Osaka 561-0841 (JP)
(72) Inventor: Yuyama, Shoji, Toyonaka-shi, Osaka 561-0841 (JP); Aoyama, Shuji, Toyonaka-shi, Osaka 561-0841 (JP); Honryo, Akitoshi, Toyonaka-shi, Osaka 561-0841 (JP)
(74) Representative: Selting, Günther

(56) References cited:
- DE-A- 19 500 531
- FR-A- 2 326 112
- US-A- 3 977 689
- US-A- 3 981 510
- US-A- 4 456 273
- US-A- 4 616 890
- US-A- 5 125 520
- US-A- 5 685 442
- US-A- 5 743 607

## Description

### BACKGROUND OF THE INVENTION

The present invention relates to a cabinet for conveying medicine which is used when conveying medicine.

Conventionally, when conveying medicine, for example, from a dispensary to each sickroom in a hospital ward, it is a known arrangement that the medicine is put in a bucket which is then stored in a cabinet provided with casters and that the cabinet with the medicine buckets stored in multistage is conveyed.

However, as the cabinet described above has a large space occupied by itself, a storage space for the cabinets must be held in the case that no medicine is conveyed. The more the number of the cabinets, the larger needs the storage space for the cabinets.

If all of the medicine buckets have uniformly the same size, there is a disadvantage that when the number of the medicines to be prescribed to a patient is large, all of the medicines can not be put in the medicine bucket, reversely when the number of medicines is small, the redundant space within the medicine bucket increases. Thus, usually, various sizes of medicine buckets have been prepared, which makes the construction of the cabinet for holding such medicine buckets complicated.

A cabinet for conveying medicine is disclosed in US 5,125,520. This cabinet is a tray rack having a plurality of tray supports of approximately Z-shaped form adapted for supporting trays. The tray supports are spaced by vertical spacer tubes. The tray racks can nest in a traverse direction for compact storage once they are not in use.

US 5,685,442 discloses a package container rack frame according to the first part of claim 1 for storing relative light weight packages. The rack frame is constructed of a pair of side frames and a plurality of support bases which are removable from the side frames. The support bases are engaged into sockets on the side frame. The side frames have folding elements for changing the distance between the side frames .

### SUMMARY OF THE INVENTION

It is an object of the present invention to provide a cabinet for conveying medicine which has a small space occupied by itself when not using it and which can hold the various sizes of medicine buckets irrespective of simple construction.

The cabinet of the present invention is defined by claim 1.

The present invention, as a means for solving the aforementioned object, provides a cabinet for conveying medicine in which a plurality of medicine bucket supporting members for supporting in multistage medicine buckets in which medicines are put are provided on a movable base member with casters, characterized in that:
the plurality of medicine bucket supporting members are juxtaposed on the base member with a predetermined distance therebetween;
the opposite faces of the plurality of medicine bucket supporting members are provided with support portions for supporting both side edges of the medicine bucket;
the plurality of medicine bucket supporting members are positioned so that, when the plurality of cabinets are juxtaposed with all of the medicine buckets removed, the plurality of medicine bucket supporting members do not interfere with the base member of the adjacent cabinet; and
whereby the medicine bucket supporting members of each cabinet can be disposed to abut against each other.

According to the construction above, with all of the medicine buckets removed, the plurality of cabinets can be aligned with each other so that the medicine bucket supporting members of each cabinet can be disposed to abut against each other. Thus, even if the number of the cabinets increase, the space owned by themselves never increase.

Preferably, the plurality of medicine bucket supporting members may be arranged so that the distance therebetween can be adjusted. Thus, even the medicine bucket having a different width can be supported.

Preferably, the plurality of medicine bucket supporting members may be pivotably provided with respect to the base member. Thus, when the plurality of cabinets are aligned with each other so that the medicine bucket supporting members of each cabinet can be disposed to abut against each other, the medicine bucket supporting members can be pivoted, whereby the space occupied by the cabinets can be further diminished.

Preferably, an engagement mechanism for disabling to remove the medicine buckets supported on the support portions of the plurality of medicine bucket supporting members may be provided and the engagement mechanism may be arranged to be intensively operated from one particular position, which allows easy manipulation.

### BRIEF DESCRIPTION OF THE DRAWINGS

Other objects and features of the present invention will become clear from the following detail description with reference to the accompanying drawings in which:
Fig. 1 is a front view of a cabinet for conveying medicine according to an embodiment of the present invention;
Fig. 2 is a plane view of Fig. 1;
Fig. 3 is a partly perspective view of Fig. 1;
Fig. 4 is a plane view showing a storage state of the cabinets for conveying medicine of Fig. 1;
Fig. 5 is a plane view showing a storage state of an another example of cabinets for conveying medicine;

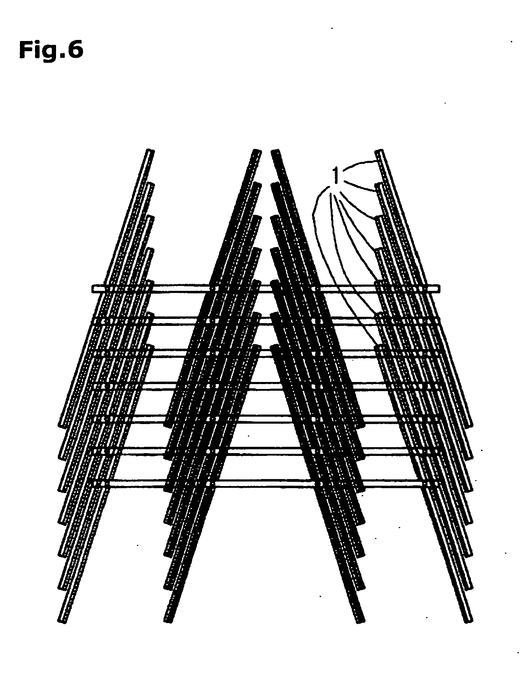

Fig. 6 is a plane view showing a storage state of a still another example of cabinets for conveying medicine;
Fig. 7 is a sectional view showing an example for locking the medicine bucket in the cabinet for conveying medicine; and
Fig. 8 is a partly perspective view showing an another example of medicine bucket supporting members slidably provided.

### DETAILED DESCRIPTION OF THE PREFERRED EMBODIMENTS

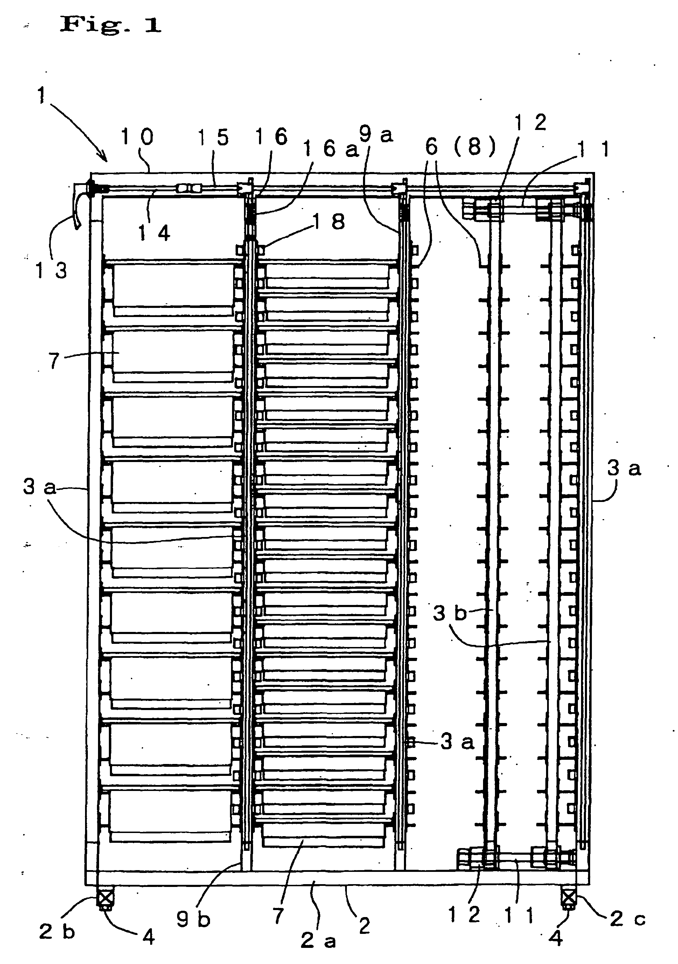

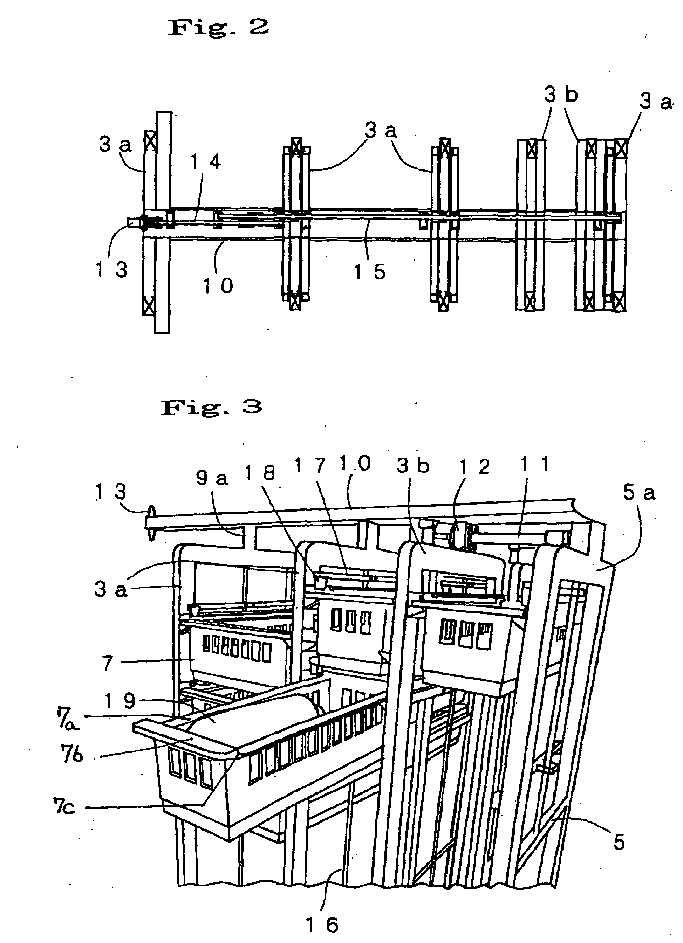

Fig. 1 shows a front view of a cabinet for conveying medicine according to the embodiment of the present invention and Fig. 2 is a plane view thereof. The cabinet 1 is made of stainless steel, steel, and aluminum alloy and so on and comprises a base frame 2 and a plurality of medicine bucket supporting members 3 juxtaposed on the base frame 2.

The base frame 2 comprises a base beam 2a and cross beams 2b, 2c connected to the lower surfaces of the both ends of the base beam 2a to have a substantially "H" shape and is provided with casters 4 at both ends of the cross beams 2b, 2c so that the base frame 2 is movable on the floor.

Each of the medicine bucket supporting members 3 is formed like a lattice plate having a rectangular shape. On each ledge 5 (Fig. 3) of the member 3 is formed a support edge 6 which protrudes laterally. Both the support edges 6 positioned at opposite portions of adjacent medicine bucket supporting members 3 constitute a support portion 8 for supporting a medicine bucket 7.

Each of the medicine bucket supporting member 3a positioned at both end portions and two middle portions of the base frame 2 is formed with protrusions 9a, 9b at the middle portions of the upper and lower ledges 5a. The upper protrusions 9a are connected with each other by means of an auxiliary beam 10 and the lower protrusions 9b are fixed to the base beam 2a of the base frame 2 so that the medicine bucket supporting members 3a are juxtaposed with a predetermined distance. The protrusions 9a, 9b allow the medicine bucket supporting members 3a to be disposed apart from the base frame 2 and the auxiliary beam 10. The distance between the medicine bucket supporting members 3a can be designed to an appropriate dimension in accordance with the size of the medicine bucket 7 to be used.

Each of the medicine bucket supporting member 3b positioned at another two middle portions of the base frame 2 is slidably mounted on slide shafts 11 which are fixed on the base beam 2a of the base frame 2 and the auxiliary beam 10 via slide bearings 12 (in Fig. 3 only upper side is illustrated). For positioning of the medicine bucket supporting members 3b, for example, Quick Set Collar® (trade name) and Ball Catch® not shown may be used.

On one end of the auxiliary beam 10, as shown in Figs. 1 to 3, is provided with a lock handle 13 which can be rotatably operated. To the lock handle 13 is connected a drive shaft 14 which is connected to a driven shaft 15 via gears. The drive shaft 14, the driven shaft 15 and gears are disposed in the auxiliary beam 10. The driven shaft 15 is connected to vertical rods 16 via rack and pinion mechanisms. Each of the vertical rods 16 is provided in the medicine bucket supporting members 3a except one positioned beneath the lock handle 13 and forced to move upward by a spring 16a. In the case that the vertical rod 16 is provided in the slidable medicine bucket supporting members 3b, it is necessary to constitute the rack and pinion mechanism to move together with the slide motion of the member 3b. The vertical rod 16 is formed with arms 16 correspondingly to the support edges 6. On both ends of each of the arms 16 are formed engagement protrusions 18 which engage with and disengage from step portions 7c formed on flange portions 7a of the medicine bucket 7 which will be described hereinafter. Thus, only by intensively operating the lock handle 13 provided on one particular position, it is possible to allow the plurality of medicine buckets 7 supported on the cabinet 1 to be in a lock state or an unlock state. It is also possible to adopt a locking mechanism to the lock handle 13 so that, after the medicine bucket 7 is set, the medicine put in the medicine bucket 7 can not be taken out unless the locking mechanism is unlocked. This surely prevents the third party from stealing a glance at the medicine under the conveyance or from freely bringing out the medicine. The uppermost medicine bucket 7 is necessary to provide a lid or so and lock it.

The medicine bucket 7 have a box-like shape upwardly opened and is made of synthetic resin such as vinyl chloride, polycarbonate, ABS resin and so on. In the present embodiment, four kinds of medicine buckets 7 each having different dimensions of width and height are used so that a transfusion bag 19 (Fig. 3) and a medicine container 20 can be stored therein. The wide type of medicine bucket 7 can store three transfusion bags 19 juxtaposed horizontally with a space for taking out remained, while the narrow type of medicine bucket 7 can store one transfusion bag 19. The high type of medicine bucket 7 can store two transfusion bags 19 stacked vertically, while the low type of medicine bucket 7 can store one transfusion bag 19. By providing a vertical side (longitudinal direction) flange portion 7a in the lower level than a horizontal side (lateral direction) flange portion 7b as shown in Fig. 3, the upper opening edge of the medicine bucket 7 is formed with a step portion 7c which the engagement protrusions 18 interlocked with the lock handle 13 engage with or disengage from. On the side walls of the medicine bucket 7 are formed a plurality of rectangular apertures 21. The apertures 21 are utilized to fit a partition plate (not shown) inside the medicine bucket 7 or to fix a medicine container 20.

Once setting of the medicine buckets 7 is completed, the lock handle 13 is turned so that the engagement portions 18 engages with the step portions 7c of the medicine bucket 7, whereby the medicine buckets 7 are in a lock state. This eliminates a disadvantage that the medicine bucket 7 have drop from the cabinet 1 or the medicines have fell off the medicine bucket 7 when moving the cabinet 1 to for example a hospital ward.

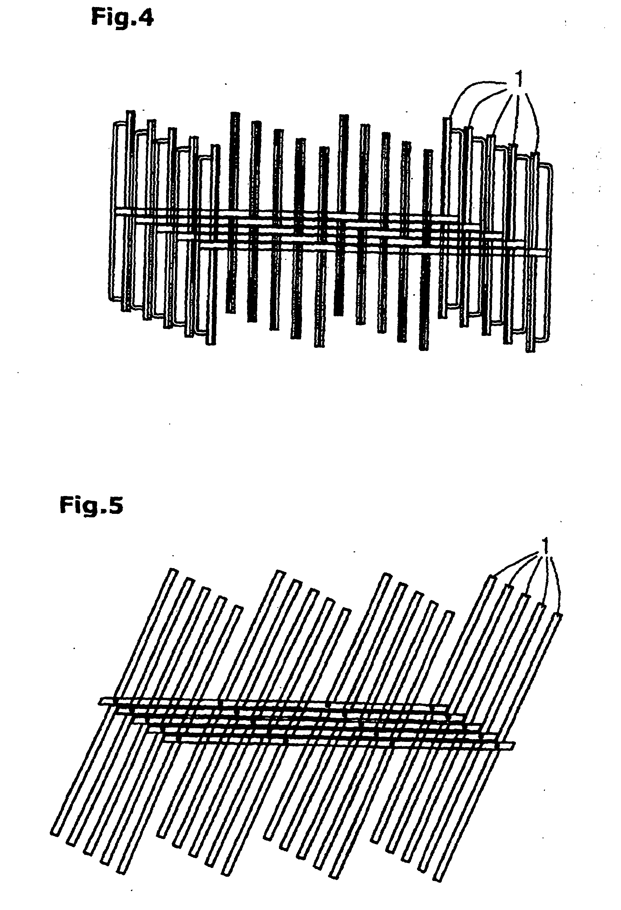

When not in use, in order to store the plurality of cabinets 1, after all of the medicine buckets 7 are removed, the cabinets 1 are disposed so that they abut against each other as shown in Fig. 4. Since the medicine bucket supporting members 3 are positioned between the base beam 2a of the base frame 2 and the auxiliary beam 10 via the protrusions 9a, 9b, they do not interfere with each other. Therefore, even if the plurality of cabinets 1 are stored, the space occupied by them can be diminished.

The medicine bucket supporting members 3 may be pivotably provided with respect to the base beam 2a the base frame 2 and the auxiliary beam 10 so that all of the members 3 as shown in Fig. 5 can be pivoted in the same direction, or two members 3 at the middle can be pivoted so as to be broadened toward the front side and two members 3 at the both ends can be pivoted so as so be parallel to the adjacent middle members 3. Thus, the space occupied by the cabinets 1 can be further diminished.

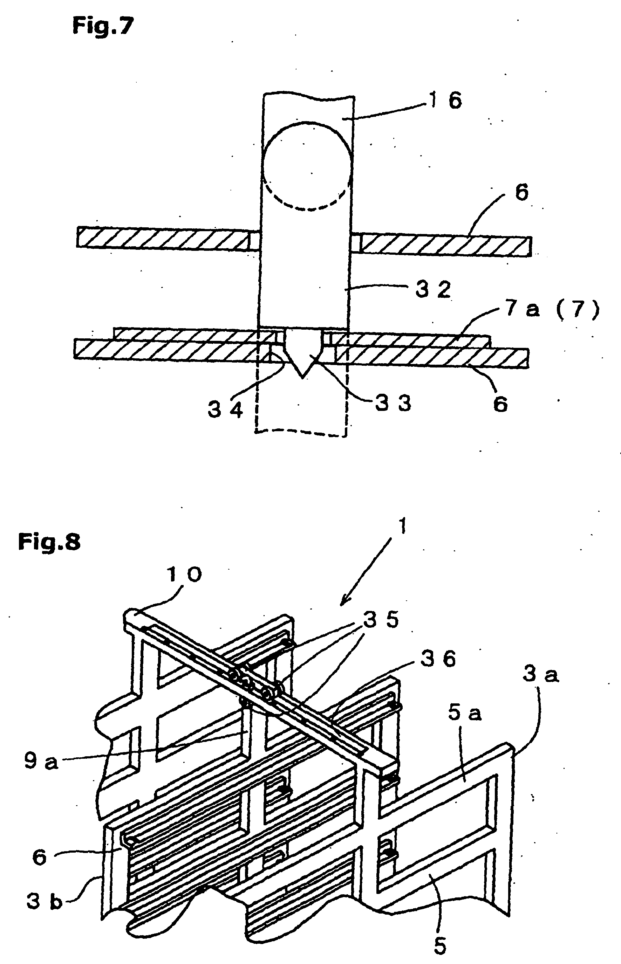

The positioning of the medicine bucket 7 to the cabinet 1 may be achieved by adopting an arrangement as shown in Fig. 7. Namely, from the vertical rod 16 is extended an arm 32 on the end of which is formed an engagement projection 33. The engagement projection 33 engage with the engagement hole 34 formed on the flange portion 7a of the medicine bucket 7.

All of the medicine bucket supporting members 3 may be fixed on the base frame 2 and the auxiliary beam 10. The slide mechanism may be arranged as shown in Fig. 8. Namely, the upper and lower protrusions 9a, 9b of the medicine bucket supporting member 3b may be inserted through guide grooves 36 formed on the base frame 2 and the auxiliary beam 10 and provided with plural pairs of rollers 35 so that the medicine bucket supporting member 3 can be slid along the guide grooves 36.

## Claims

1. A cabinet for conveying medicine having casters (4), comprising a plurality of medicine bucket supporting members (3a,3b) for supporting in multistage medicine buckets (7) in which medicines are put, wherein
opposite faces of the plurality of medicine bucket supporting members (3a,3b) are provided with support portions (8) for supporting both side edges of each of the medicine buckets (7);
**characterized in that**
the plurality of medicine bucket supporting members (3a,3b) are provided on a movable base member (2),
the movable base member (2) comprises a base beam (2a) and cross beams (2b,2c) connected to the lower surface of the both ends of the base beam (2a) to have an H-shape,
each of the plurality of medicine bucket supporting members (3a,3b) has protrusions (9a,9b) at the centers of the upper and lower ledges (5a) thereof, more than two of the medicine bucket supporting members (3a,3b) are juxtaposed on the base beam (2a) with a predetermined distance therebetween;
a lower ledge (5a) of each of the plurality of medicine bucket supporting members (3a,3b) is connected to the base beam (2a) via the protrusion (9b); and
an upper ledge (5a) of each of the plurality of medicine bucket supporting members (3a,3b) is connected to an auxiliary beam (10) via the protrusion (9a);
whereby when a plurality of cabinets (1) are juxtaposed with all of the medicine buckets (7) removed, the medicine bucket supporting members (3a,3b) of each cabinet (1) can be disposed to abut against each other without interference with the base member (2) and the auxiliary beam (10) of an adjacent cabinet (1).

2. The cabinet according to claim 1, wherein the upper and lower ends of at least one of the plurality of medicine bucket supporting members (3a,3b), positioned at middle portions of the base number (2), are connected to slide shafts (11) which are fixed on the base beam (2a) of the base member (2) and the auxiliary beam (10), whereby the plurality of medicine bucket supporting members (3a,3b) are arranged so that the distance therebetween can be adjusted.

3. The cabinet according to claim 1, wherein the plurality of medicine bucket supporting members (3a,3b) are pivotably provided with respect to the base member (2).

4. The cabinet according to claim 1, wherein an engagement mechanism (13) for disabling to remove the medicine buckets (7) supported on the support portions (6) of the plurality of
medicine bucket supporting members are provided and wherein the engagement mechanism is arranged to be intensively operated from one particular position.

## Patentansprüche

1. Schrank mit Rollen zum Befördern von Medizin, mit mehreren übereinander angeordneten Medizinbehälterstützelementen (3a, 3b) zum Stützen von mehreren Medizin enthaltenden Medizinbehältern (7), wobei
einander gegenüberliegende Seiten der mehreren Medizinbehälterstützelemente (3a, 3b) mit Stützteilen (8) zum Stützen beider Seitenränder jedes der Medizinbehälter (7) versehen sind;
**dadurch gekennzeichnet, daß**
die mehreren Medizinbehälterstützelemente (3a, 3b) auf einem bewegbaren Basisteil (2) vorgesehen sind,
das bewegbare Basisteil (2) einen Basisträger (2a) und Querträger (2b, 2c), die mit der Unterseite der beiden Enden des Basisträgers (2a) zu einer H-Form verbunden sind, aufweist,
jedes der mehreren Medizinbehälterstützelemente (3a, 3b) Vorsprünge (9a, 9b) in der Mitte der oberen und der unteren Leiste (5a) derselben aufweist, wobei mehr als zwei der Medizinbehälterstützelemente (3a, 3b) mit einem vorbestimmten gegenseitigen Abstand nebeneinander auf dem Basisträger (2a) angeordnet sind;
eine untere Leiste (5a) jedes der mehreren Medizinbehälterstützelemente (3a, 3b) durch den Vorsprung (9b) mit dem Basisträger (2a) verbunden ist; und
eine obere Leiste (5a) jedes der mehreren Medizinbehälterstützelemente (3a, 3b) durch den Vorsprung (9a) mit einem Hilfsträger (10) verbunden ist;
wodurch, wenn mehrere Schränke (1), aus denen sämtliche Medizinbehälter (7) entnommen sind, nebeneinander angeordnet sind, die Medizinbehälterstützelemente (3a, 3b) jedes Schranks (1) in Anlage aneinander angeordnet werden können, ohne Beeinträchtigung durch das Basisteil (2) und den Hilfsträger (10) eines benachbarten Schranks (1).

2. Schrank nach Anspruch 1, bei dem das obere und das untere Ende mindestens eines der Medizinbehälterstützelemente (3a, 3b), das im Mittelbereich des Basisteils (2) positioniert ist, mit Gleitschäften (11) verbunden sind, welche an dem Basisträger (2a) des Basisteils (2) und dem Hilfsträger (10) angebracht sind, wodurch die mehreren Medizinbehälterstützelemente (3a, 3b) derart angeordnet sind, dass der Abstand zwischen ihnen einstellbar ist.

3. Schrank nach Anspruch 1, bei dem die mehreren Medizinbehälterstützelemente (3a, 3b) in bezug auf das Basisteil (2) schwenkbar sind.

4. Schrank nach Anspruch 1, bei dem ein Eingreifmechanismus (13) vorgesehen ist, um das Entnehmen der auf den Stützteilen (6) der mehreren Medizinbehälterstützelemente ruhenden Medizinbehälter (7) zu sperren, und wobei der Eingreifmechanismus derart angeordnet ist, dass er von einer bestimmten Position aus intensiv betätigbar ist.

## Revendications

1. Armoire pour transporter des médicaments, équipée de roulettes (4), dans laquelle est prévue une pluralité d'éléments supports de bacs à médicaments (3a, 3b) destinés à supporter des bacs à médicaments (7) disposés en étages multiples et dans lesquels des médicaments sont disposés, où
des faces opposées de la pluralité d'éléments supports de bacs à médicaments (3a, 3b) sont munies de portions d'appui (8) destinées à supporter les deux bords latéraux de chacun des bacs à médicaments (7) ;
**caractérisée en ce que**
la pluralité d'éléments supports de bacs à médicaments (3a, 3b) est prévue sur un élément de base mobile (2),
l'élément de base mobile (2) comprend une poutre de base (2a) et des poutres transversales (2b, 2c) reliées à la surface inférieure des deux extrémités de la poutre de base (2a) pour donner une forme de H,
chacun de la pluralité d'éléments supports de bacs à médicaments (3a, 3b) présente des saillies (9a, 9b) au milieu de ses traverses supérieure et inférieure (5a), plus de deux des éléments supports de bacs à médicaments (3a, 3b) sont juxtaposés sur la poutre de base (2a) en laissant entre eux une distance prédéterminée ;
une traverse inférieure (5a) de chacun de la pluralité d'éléments supports de bacs à médicaments (3a, 3b) est reliée à la poutre de base (2a) par l'intermédiaire de la saillie (9b) ; et
une traverse supérieure (5a) de chacun de la pluralité d'éléments supports de bacs à médicaments (3a, 3b) est reliée à une poutre auxiliaire (10) par l'intermédiaire de la saillie (9a) ;
de sorte que, lorsque les armoires d'une pluralité d'armoires (1) sont juxtaposées, tous les bacs à médicaments (7) étant retirés, les éléments supports de bacs à médicaments (3a, 3b) de chaque armoire (1) peuvent être disposés de manière à buter l'un contre l'autre sans se trouver sur le trajet de l'élément de base (2) ni sur celui de la poutre auxiliaire (10) d'une armoire (1) adjacente.

2. Armoire selon la revendication 1, dans laquelle les extrémités supérieure et
inférieure d'au moins un de la pluralité d'éléments supports de bacs à médicaments (3a, 3b) positionnés dans des portions médianes du châssis de base (2) sont reliées à des barres à coulisse (11) qui sont fixées à une poutre de base (2a) de l'élément de base (2) et à la poutre auxiliaire (10), de sorte que les éléments de la pluralité d'éléments supports de bacs à médicaments (3a, 3b) sont agencés de manière que la distance qui les sépare puisse être ajustée.

3. Armoire selon la revendication 1, dans laquelle les éléments de la pluralité
d'éléments supports de bacs à médicaments (3a, 3b) sont prévus pour pouvoir pivoter par rapport à l'élément de base (2).

4. Armoire selon la revendication 1, dans laquelle il est prévu un mécanisme d'arrêt (13) servant à empêcher de retirer les bacs à médicaments (7) supportés par les portions d'appui (6) de la pluralité d'éléments supports de bacs à médicaments et dans laquelle le mécanisme d'arrêt est agencé pour être actionné à force à partir d'une position particulière.
